# EUROPEAN PATENT APPLICATION

(11) **EP 1 865 422 A1**
(43) Date of publication of application: **12.12.2007**
(21) Application number: 06115252.6
(22) Date of filing: 09.06.2006
(51) Int. Cl.: G06F 17/30

(54) **Software, methods and apparatus facilitating presentation of a wireless communication device user interface with multi-language support**

(71) Applicant: Nextair Corporation, Waterloo, ON N2L 3W8 (CA)
(72) Inventor: Neil, Tim, Mississauga Ontario L5M 7H2 (CA)
(74) Representative: Rickard, David John

(57) **Abstract**

At a wireless communication device, a markup language document defining a format of a user interface (e.g. for presenting data from a remote application) is received. The markup language document includes at least one descriptor for locating a textual component of the user interface within a separate file. The separate file containing the at least one textual component is also received at the device. Based on the descriptor(s) and the separate file, the textual component(s) is (are) presented within the user interface at the wireless communication device. The separate file may be a second markup language document, in which case the textual component(s) may be accessed from a dynamically accessible representation thereof, such as a Document Object Model (DOM) tree, and each descriptor may define a path to a textual component within said second markup language document. Multi-language support may be provided through the provision of multiple separate files.

## Description

The present disclosure relates to software, methods and apparatus facilitating presentation of a wireless communication device user interface with multi-language support.

Wireless connectivity is a feature of the modern telecommunications environment. An increasing range of people are using a wide variety of wireless data networks to access corporate data applications. However, there are numerous competing mobile devices (also referred to as wireless communication devices) that can be used to achieve this. Each device has its own operating system and its own display characteristics. Operating systems are not mutually compatible, nor are the display characteristics--some are color, some are black and white, some are text-only, some are graphical, some are larger and some are smaller.

Therefore, a mechanism whereby a mobile client for a server-side application may be enabled for multiple wireless communication devices with minimal modification of the application at the server is desirable. Further, given the increasingly global nature or the marketplace, convenient support of multiple languages for mobile applications of various types would be desirable. More generally, the ability to present a wireless communication device user interface with multi-language support is desirable.

### BRIEF DESCRIPTION OF THE DRAWINGS

In the figures which illustrate example embodiments:

FIG. 1 is a schematic diagram illustrating an exemplary system for presenting data from a server-based application at a wireless communication device;

FIG. 2 is a schematic diagram illustrating a transaction server component of the system of FIG. 1 in greater detail;

FIG. 3 is a schematic diagram illustrating a wireless communication device component of the system of FIG. 1 including virtual machine software;

FIG. 4A illustrates the organization of exemplary virtual machine software at the wireless communication device of FIG. 3;

FIG. 4B further illustrates the organization of exemplary virtual machine software at the wireless communication device of FIG. 3;

FIG. 5 is a schematic diagram illustrating a rapid application development (RAD) tool component of the system of FIG. 1 in greater detail;

FIG. 6 is a schematic diagrams illustrating a tree data structure stored in memory of the RAD tool of FIG. 5;

FIG. 7 is a schematic diagram illustrating another tree data structure stored in memory of the RAD tool of FIG. 5;

FIGS. 8A and 8B illustrate user interface components which may be displayed on the display of the RAD tool of FIG. 5; and

FIGS. 9A and 9B illustrate an application definition file generated by the RAD tool of FIG. 5;

FIG. 10 illustrates a multi-language definition file generated by the RAD tool of FIG. 5; and

FIG. 11 illustrates a sequence diagram detailing data flow between the transaction server of FIG. 2 and the wireless communication device of FIG. 3.

### DESCRIPTION OF PREFERRED EMBODIMENTS

The embodiment described herein incorporates software and preferably performs methods which facilitate execution of an application (referred to as a "mobile application") at wireless communication devices in multiple languages (e.g. English, French, etc.). The embodiment may be used in conjunction with a system for presenting data from a server-based application at a wireless communication device, as described in U.S. Patent Publication No. 2003/0060896.

In one aspect of the below-described embodiment, there is preferably provided a method comprising, at a wireless communication device, receiving a markup language document defining a format of a user interface, the markup language document including a descriptor for locating a textual component of the user interface within a separate file; at the wireless communication device, receiving the separate file containing the textual component; and based on the descriptor and the separate file, presenting the textual component within the user interface at the wireless communication device.

In another aspect of the below-described embodiment, there is preferably provided a machine-readable medium comprising machine-executable code for presenting a textual component within a user interface of a wireless communication device, the presenting being based on a markup language document defining a format of the user interface and a separate file containing a textual component of the user interface, the markup language document including a descriptor for locating the textual component within the separate file.

In yet another aspect of the below-described embodiment, there is preferably provided a wireless communication device comprising at least one processor; and a memory coupled to the at least one processor storing: a markup language document defining a format of a user interface, the markup language document including a descriptor for locating a textual component of the user interface within a separate file; the separate file containing the textual component; and machine-executable code which, when executed by the at least one processor, presents the textual component within the user interface based on the descriptor and the separate file.

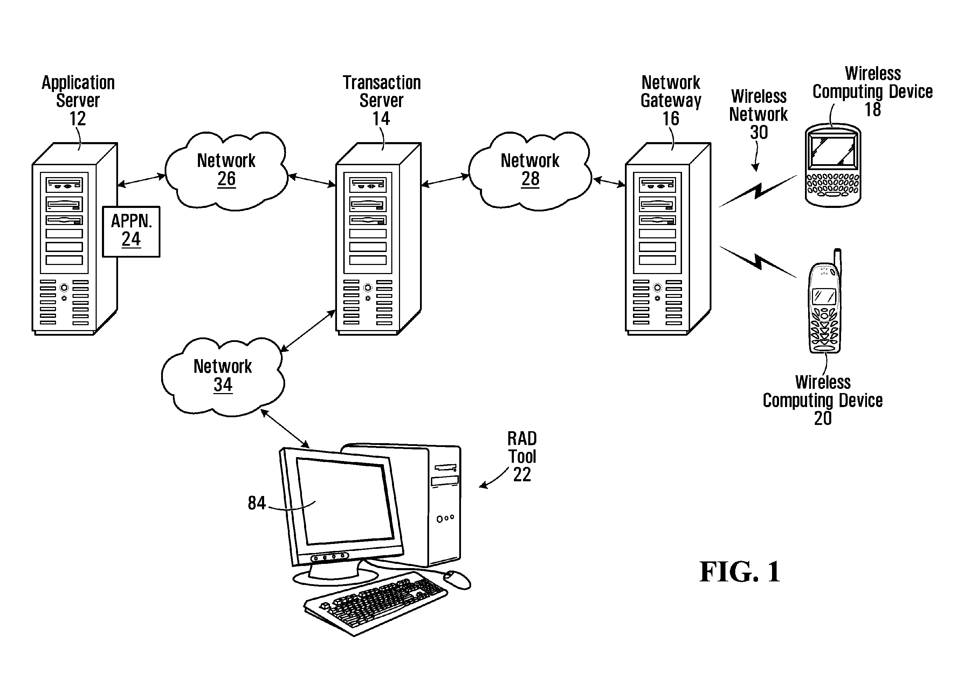

FIG. 1 is a schematic diagram illustrating an exemplary system 10 for presenting data from a server-based application at a wireless communication device. This embodiment is an enhancement of the system described in U.S. Patent Publication No. 2003/0060896 defining a novel approach for providing multi-language support at mobile devices, as described hereinafter.

The system 10 of FIG. 1 includes an application server 12, a transaction server 14, a network gateway 16, a pair of exemplary wireless communication devices (also referred to as "mobile devices" herein and in U.S. Patent Publication No. 2003/0060896) 18 and 20, and a Rapid Application Development (RAD) tool 22. The application server 12, transaction server 14, network gateway 16, and wireless communication devices 18 and 20 are analogous to the application server 70, middleware server 44, network gateway 40, and mobile devices 10 and 30, respectively, of U.S. Patent Publication No. 2003/0060896, and will thus not be described in great detail, except to the degree that these components are modified from their implementation in the above-noted publication.

Application server 12 is a server which hosts at least one conventional software application 24 to which wireless communication device access is desired. The application 24 receives and generates data. The role of system 10 is to present data generated by the application 24 at wireless communication devices 18 and/or 20 and to send data generated at wireless communication devices 18 and/or 20 (responsive to user interaction with the devices) back to the application 24. The application server 12 sends and receives this data to and from transaction server 14 over a data network 26, which may be the Internet or a private data network for example, e.g. using HTTP running on top of a standard TCP/IP stack.

Transaction server 14 corresponds to middleware server 44 of U.S. Patent Publication No. 2003/0060896, except that it has been enhanced to facilitate multi-language support for mobile applications, as will be described. The role of transaction server 14 is essentially twofold. First, it stores application-specific markup language documents (referred to as application definition files in the above-noted U.S. patent publication and hereinafter), for access by wireless communication devices 18, 20 desirous of presenting data from an application 24 executing at application server 12. The application definition files dictate the behavior and user interface (UI) of the wireless communication devices, as described in the above-noted publication. The transaction server further stores, for each application definition file, a multi-language definition file also a markup language document for purposes of facilitating presentation of mobile applications in multiple languages at mobile devices 18 and 20. Second, once presentation of data from application 24 at a wireless communication device 18 or 20 has begun, the transaction server acts as an intermediary for communications between the application server 12 and the wireless communication device 18 or 20. It is the former role which is of primary interest in this description.

Network gateway 16 is a gateway between data network 28, which may be the Internet or a private data network for example, and a wireless network 30. In combination, data network 28, network gateway 16, and wireless network 30 facilitate communication of application data between the transaction server 14 and wireless communication devices 18 and 20.

Wireless communication devices 18 and 20 are wireless communication devices, such as two-way paging devices, WinCE based devices, PalmOS devices, WAP enabled mobile telephones, or the like, which are capable of presenting data from remote applications, as described in detail in the above-referenced U.S. Patent Publication. Specifically, memory at devices 18 and 20 stores virtual machine software which interprets a textual application definition file downloaded from transaction server 14, defining: a user interface and display format (including display flow) for an application; the format of data to be exchanged over the wireless network 30 for that application; and the format of data to be stored locally at the wireless communication devices 18 and 20. These aspects may be encoded in form of XML elements and attributes within the application definition file. Based on these XML element and attributes, the virtual machine software instantiates corresponding objects dynamically at run time to present application data and to accept user input for transmission back to the executing application 24 at application server 12. The UI screens and controls presented at the wireless communication device 18 or 20 may emulate the UI screens and controls that a user would see when executing the full application 24 at a desktop computer or workstation. In the present embodiment, the displayable textual components of the UI screens (e.g. titles, control labels, captions, etc.) are not contained within the application definition file, but rather are contained in a separate, language-specific language definition file which is created at transaction server 14 from a language-specific portion of the multi-language definition file and downloaded on demand to the device 18 or 20, as will be described.

Also illustrated in FIG. 1 is a rapid application development (RAD) tool 22. RAD tool 22 is a computing device 76, such as an Intel®-Processor based personal computer (PC) for example, executing RAD software which allows a developer to create application definition files and multi-language definition files for uploading to transaction server 14, as will be described. Uploading may be performed over a data network 34, which may be the Internet or a private data network for example. In some embodiments, the markup language documents that are uploaded to the transaction server 14 may not be application definition files, but rather may be master definition files, from which application definition files are created at transaction server 14, as described in the above-referenced U.S. Patent Publication No. 2003/0060896. For simplicity, in the present embodiment, the RAD tool 22 is assumed to generate application definition files rather than master definition files, as will be described.

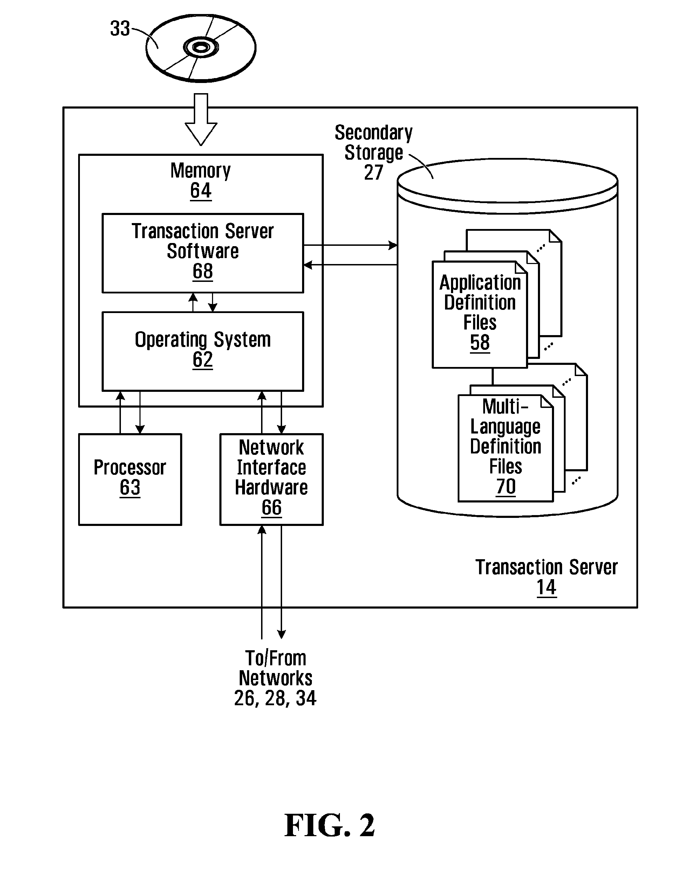

FIG. 2 is a schematic diagram illustrating transaction server 14 in greater detail. Transaction server 14 be any conventional application server, modified to function as described herein. As such, transaction server 14 includes a processor 63, in communication with a network interface 66 and memory 64. Transaction server 14 may be, for example, be a Windows NT server, a Sun Solaris server, or the like. Memory 64 of transaction server 14 stores an operating system 62 such as Windows NT or Solaris operating system. Transaction server 14 also has secondary storage 27, which may be a hard drive for example, storing application definition files 58 and multi-language definition files 70 (described below).

Network interface 66 enables transaction server 14 to transmit and receive data over data networks 26, 28 and 34.

Memory 64 at transaction server 14 stores transaction server software 68. Transaction software 68 has various functions. First, it enables the transaction server 14 to compose and exchange XML data packages with wireless communication devices 18 and 20 or application server 12. Second, transaction software 68 generates, from multi-language definition files 70, language-specific language definition files (not expressly illustrated in FIG. 2). As will be desribed, these language definition files are sent along with application definition files 58, on demand, to wireless communication device 18 or 20 when a user of the device indicates his or her desire to load and execute a mobile application in a selected language. Application definition files 58 and multi-language definition files 70 are received from RAD tool 22, where they are generated by a developer using application development software, as will be discussed. Each application definition file 58 has a corresponding multi-language definition file 70 in the present embodiment. Each application definition file 58 at the transaction server 14 defines a distinct mobile application which a user may choose to download for interpretation and execution at a wireless communication device 18 or 20, whereas each multi-language definition file 70 contains the displayable textual components (e.g. UI screens constructs such as menu items, button labels, captions and the like) for the application in multiple languages.

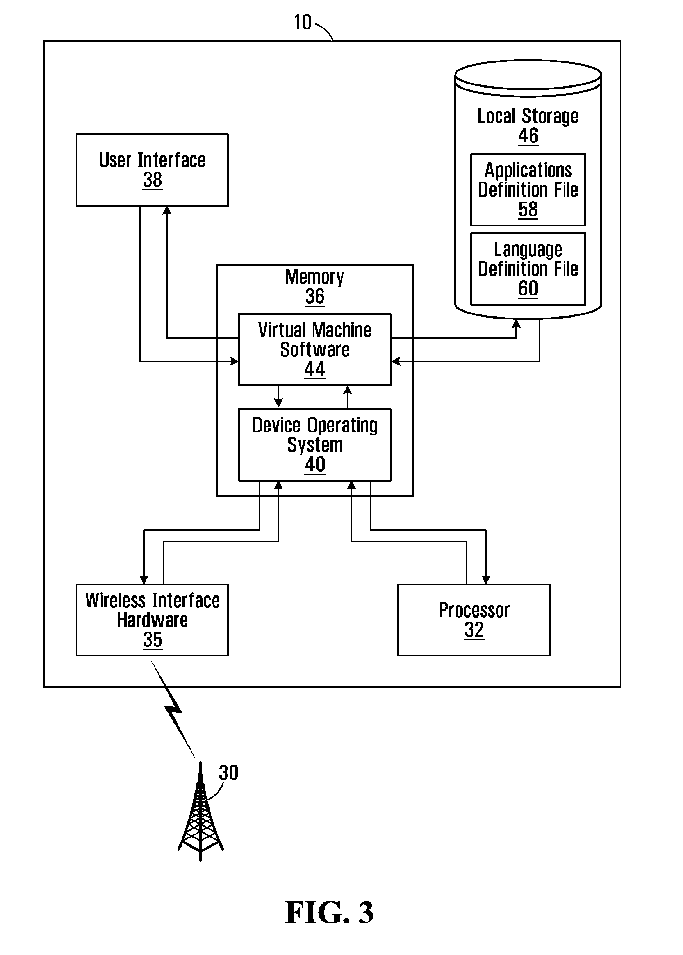

FIG. 3 illustrates one of the wireless communication devices 18 in greater detail. The structure of the second wireless communication device 20 is similar to that of wireless communication device 18. Wireless communication device 18 may be any conventional wireless communication device, modified to function in the manner described below. As such, wireless communication device 18 includes a processor 32, in communication with a network interface 35, storage memory 36, and a user interface 38 typically including a keypad and/or touch-screen. Network interface 35 enables device 18 to transmit and receive data over a wireless network 30. As previously indicated, wireless communication device 18 may be, for example, a WinCE based device, a PalmOS device, a WAP enabled mobile telephone, or the like. Memory 36 of device 18 stores a mobile operating system such as the PalmOS, or WinCE operating system software 40. Operating system software 40 typically includes graphical user interface and network interface software having suitable application programmer interfaces ("API"s) for use by other applications executing at device 18.

Memory at device 18 further stores virtual machine software 44 which, when executed by mobile device 18, enables device 18 to present an interface for server-side applications provided by transaction server 14, as described below. Specifically, virtual machine software 44 interprets a text application definition file 58 and corresponding language definition file 60 defining a definition of a graphical user interface 38 controlling application functionality, and the display format (including display flow) at device 18 for a particular server-side application; the format of data to be exchanged over the wireless network for the application; and the format of data to be stored locally at device 18 for the application. Virtual machine software 44 uses operating system 40 and associated APIs to interact with device 18, in accordance with the received application definition file 58. In this way, device 18 may present interfaces for a variety of applications, stored at the application server 12 (FIG. 1). From the perspective of operating system 40, virtual machine software 44 is viewed as another application resident at device 18. Moreover, multiple wireless devices 18, 20 (FIG. 1) each having a similar virtual machine software 44 may use a common server side application 24 in combination with an application definition file 58 and corresponding language definition file 60, to present a graphical user interface and program flow specifically adapted for the device.

As such, and as will become apparent, the exemplary virtual machine software 44 is specifically adapted to work with the particular mobile device 18. Thus if device 18 is a PalmOS or WinCE device, virtual machine software 44 would be a PalmOS or a WinCE virtual machine, respectively. Virtual machine software 44 is capable of accessing local storage 46 at device 18, as will be described.

As detailed below, an exemplary application definition file 58 may be formed using a mark-up language, such as the well-known Extensible Markup Language (XML). Defined XML entities are understood by the virtual machine software 44. Exemplary defined XML entities are detailed in Appendix "A" of U.S. Patent Publication No. 2003/0060896, which Appendix is an ARML specification (ARML is a form of XML markup language used in the present embodiment.) A person of ordinary skill will readily appreciate that those XML entities identified in Appendix "A" are exemplary only, and may be extended, shortened, or modified as desired. The defined XML entities are interpreted by the virtual machine software 44, and may be used as building blocks to present server-side applications at mobile device 18, as detailed herein.

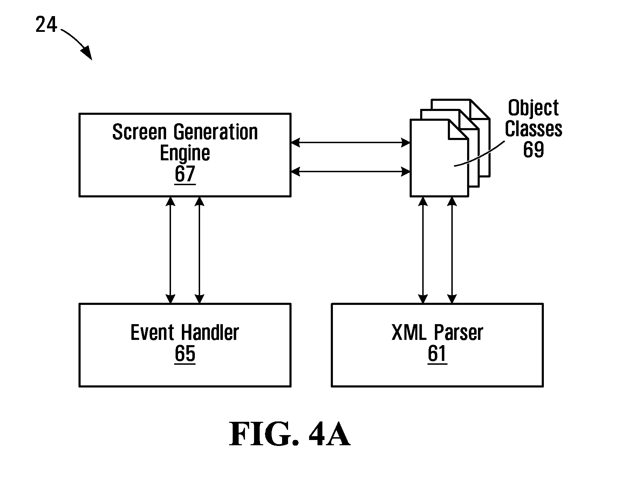

Specifically, as illustrated in FIG. 4A, virtual machine software 44 includes a conventional XML parser 61; an event handler 65; a screen generation engine 67; and object classes 69 corresponding to XML entities supported by the virtual machine software 44, and possibly contained within an application definition file 58.

XML parser 61 may be formed in accordance with the Document Object Model, or DOM, which is available at www.w3.org/DOM/. Parser 61 enables virtual machine software 44 to read an application definition file 58. Using the parser, the virtual machine software 44 may form a binary representation of the application definition file 58 for storage at the mobile device, thereby eliminating the need to parse text each time an application is used. Parser 61 may convert each XML tag contained in the application definition file 58, and its associated data, to tokens, for later processing. As will become apparent, this may avoid the need to repeatedly parse the text of an application definition file 58.

Screen generation engine 67 displays initial and subsequent screens at the mobile device, in accordance with an application definition file 58, as detailed below.

Event handler 65 of virtual machine software 44 allows device 18 under control of virtual machine software 44 to react to certain external events. Example events include user interaction with presented screens or graphical user interface constructs, incoming messages received from wireless network 30, or the like.

Object classes 69 also form part of virtual machine 44 for use in defining objects that allow wireless communication device 18 to represent each of the supported XML entities at the device. Each of object classes 69 includes attributes (e.g. fields or data members) used to store parameters defined by the XML file (XML element and/or attribute values), and allowing the XML entity to be processed at the mobile device, as detailed in Appendix "A" referenced above, for each supported XML entity. Virtual machine software 44 may be expanded to support XML entities not detailed in Appendix "A" by adding corresponding object classes to virtual machine software 44.

As detailed below, upon invocation of a particular mobile application (as defined by application definition file 58 and corresponding language definition file 60) at wireless communication device 18, the virtual machine software 44 presents an initial screen based on the contents of the application definition file 58 for the application. Screen elements are created by screen generation engine 67 by creating instances of object classes 69 corresponding to defined elements. The object instances are "customized" to the application using element and attribute values contained in the application definition file 58. Thereafter the event handler 65 of the virtual machine software 44 reacts to events for the application. The manner in which the event handler reacts to events is governed by the contents of the application definition file 58. Events may trigger processing defined within instances of associated "action" objects, which objects are instantiated from object classes 69 of virtual machine software 44, as detailed below.

Similarly, object classes 69 of virtual machine software 44 further include object classes corresponding to data tables and network transactions defined in the Table Definition and Package Definition sections of Appendix "A" referenced above. At run time, instances of object classes corresponding to these classes are created and populated with parameters contained within application definition file 58, as required.

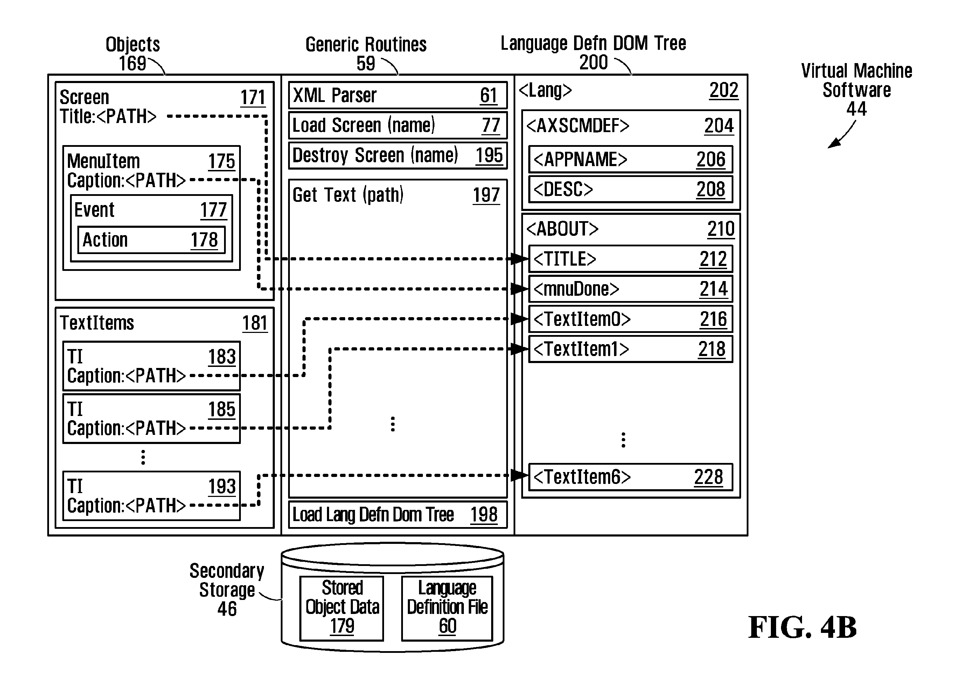

FIG. 4B illustrates in greater detail the manner in which the virtual machine software 44 of FIG. 4A may be organized. For purposes of FIG. 4B it is assumed that the wireless communication device 18 is currently executing a mobile application. As illustrated, the virtual machine software 44 has three categories of components, namely, objects 169, general purpose routines 59, and a language definition DOM tree 200.

Objects 169 are instantiations of object classes 69 (FIG. 4A) which are created dynamically at run time when the mobile application is executed at the wireless communication device 18. The types of objects 169 that are instantiated at any given moment (e.g. screens, menus, text items, events, actions, etc., as will be described) depends upon the mobile application currently being executed and its state, including which user interface screen is currently displayed at the mobile device. Each of objects 169 corresponds to an XML element defined within the application definition file 58. The objects 169 are instantiated from binary representations 179 thereof which are maintained in secondary storage 46, which representations 179 are created when the application definition file 58 is initially parsed (as described in more detail below). Each object 169 contains methods which capture certain behaviours that are performed by all instances of the represented object, as well as data members which permit the characteristics or behavior of the object to be "customized" (e.g. each instance of a button object may include the same highlight() method which, if invoked, causes the button to become highlighted, and may further include X and Y coordinate data member values which define a unique location of the button on the encompassing GUI screen). A more detailed description of the exemplary set of objects 169 of FIG. 4B is provided below in conjunction with the description of operation of the present embodiment.

General purpose routines 59, on the other hand, constitute a managing environment for the objects 169. The routines 59 encompass functionality which is useful for executing a mobile application at the wireless communication device but is not necessarily tied to a particular type of object 169. For example, the routines 59 may include the XML parser 61, which initially parses the application definition file 58. Other routines and 195 may facilitate loading or closing of GUI screens respectively. Notably, a getText() routine 197 is invoked by objects 169 desirous of obtaining a textual GUI component from the language definition DOM tree 200 (described below). The routines 59 effectively consolidate certain functionality for convenient invocation from any of objects 169, as required.

Language definition DOM tree 200 is a dynamically accessible representation of the language definition file 60 that is stored in secondary storage 46 of wireless communication device 18 (FIG. 3). The DOM tree 200 stores all of the displayable textual components of a current mobile application in the language selected by the user for run-time access by objects 169 during the course of graphical user interface screen display. The language definition DOM tree 200 is instantiated during initialization of virtual machine software 44. The language definition DOM tree 200 appears as illustrated in FIG. 4B after this initialization is complete. As will be appreciated, the language definition DOM tree 200 serves as a language-specific component of virtual machine software 44 which can be dynamically replaced, through the provision of a new language definition file 60 from transaction server 14, in order to cause a mobile application to display its text in a different language. A more detailed description of the structure and use of exemplary language definition DOM tree 200 of FIG. 4B for this purpose is provided below in conjunction with the description of operation of the present embodiment.

Using the above general description and the description which follows, persons of ordinary skill in the art will be able to form virtual machine software 44 for any particular wireless communication device. Typically, virtual machine software 44 may be formed using conventional object oriented programming techniques, and existing device libraries and APIs, as to function as detailed herein. As will be appreciated, the particular format of screen generation engine 67 and object classes 69 will vary depending on the type of virtual machine software, its operating system and API available at the device. Once formed, a machine-executable version of virtual machine software 44 may be loaded and stored at a mobile device, using conventional techniques. It can be embedded in ROM, loaded into RAM over a network, or from a machine readable medium.

Although, in the described embodiment the virtual machine software 44 and software forming object classes 69 are formed using object-oriented structures, persons of ordinary skill will readily appreciate that other approaches could be used to form suitable virtual machine software. For example, object classes 69 forming part of the virtual machine could be replaced by equivalent functions, data structures or subroutines formed using a conventional (i.e. non-object oriented) programming environment. Operation of virtual machine software 44 under control of an application definition file 58 and language definition file 60 containing various XML definitions is further detailed below.

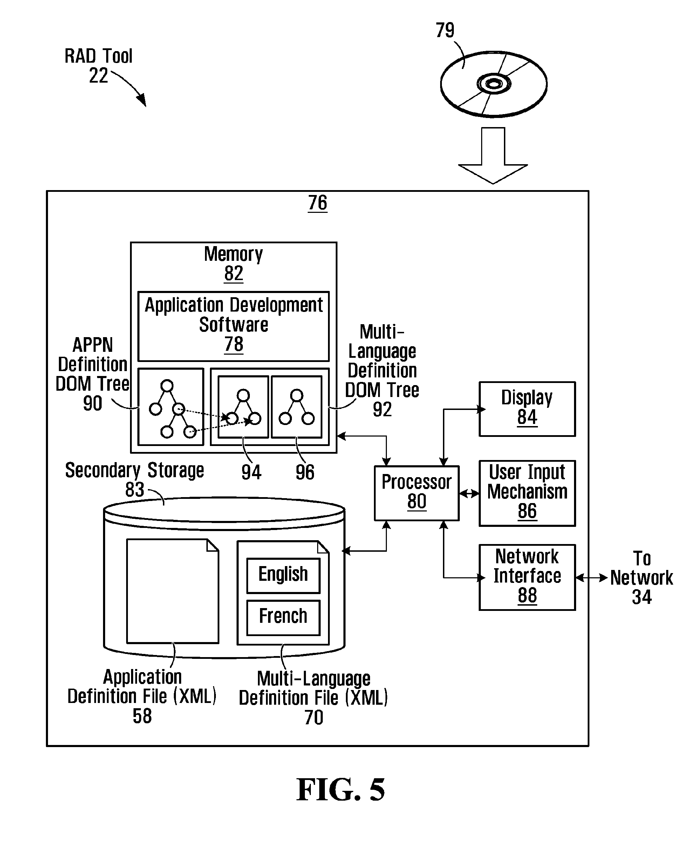

FIG. 5 schematically illustrates RAD tool 22 in greater detail. In the present embodiment the RAD tool 22 is a PC 76 executing rapid application development software 78. The PC 76 includes a processor 80 in communication with memory 82 which stores the software 78. The PC 76 further includes a conventional display 84, such as a Cathode Ray Tube (CRT) monitor or flat-screen display for example, and a conventional user input mechanism (UIM) 86, such as a keyboard and/or mouse for example. The PC 76 further includes a network interface card 88 (e.g. an Ethernet interface) which facilitates communication by the tool 22 over network 34, e.g. for purposes of uploading a completed application definition file 58 and corresponding language definition file 60 and to the transaction server 14. It also includes secondary storage 83, which may be a hard drive for example.

The application development software 78 provides a graphical user interface which facilitates "drag and drop" development of mobile applications. As a user develops a mobile application, the tool 22 automatically generates a dynamically-accessible representation of the corresponding hierarchy of XML elements (e.g. in accordance with Appendix "A", referenced above) within memory 82, in the form of an application definition DOM tree 90 data structure. The displayable textual components of the mobile application, on the other hand, are stored within a separate, multi-language definition DOM tree 92 data structure. Within the application definition DOM tree 90, each XML element or attribute which includes a displayable textual component of the mobile application, such as a button label or screen title caption, stores a descriptor which defines a reference to the text which is actually stored within DOM tree 92. The references, which may be thought of as pointers, are illustrated schematically in FIG. 5 as dashed arrows between DOM tree 90 and DOM tree 92. As will be appreciated, the storage of these "pointers" within DOM tree 90, rather than of the text itself, facilitates execution of the same mobile application in different languages, since the pointers may stay the same even if the referenced text changes. The language definition DOM tree 92 can contain multiple "sub-trees" 94 and 96, each containing the same set of displayable textual components, but in a different language, as will be described. At the wireless communication device 18, only one of these languages will be operative at any given time. Application development software 78 may be written in Delphi, using an SQL Server database for example, and may be loaded into PC 76 from a machine-readable medium, such as an optical disk 32.

The application definition file 58 and multi-language definition file 70 are serialized representations of the application definition DOM tree 90 and multi-language definition DOM tree 92, respectively. These serialized representations are created by the RAD tool 22 when development of the mobile application is complete. They are stored in secondary storage 83 prior to their transmission to the transaction server 14, for use by the wireless communication device on demand, as will now be described.

In operation, a developer uses the RAD tool 22 (FIG. 5) to develop a mobile application. Development of a mobile application generally entails selecting a format of data (e.g. XML packages) to be exchanged with the server-side application 24 (FIG. 1) via the wireless network 30, selecting a format of data to be stored locally at the wireless communication device 18 or 20, and developing a graphical user interface format for the mobile application. Development of graphical user interface screens is performed using convenient drag-and-drop GUI mechanisms provided by the application development software 78 which permit the developer to lay out GUI constructs on a virtual mobile device screen in a what-you-see-is-what-you-get (WYSIWYG) type format. The layout depends in part upon the type of wireless communication device for which the mobile application is being developed, e.g., due to display size limitations for particular device types.

As the mobile application is developed, the application definition DOM tree 90, which is representative of the mobile application under development, dynamically grows within memory 82 of RAD tool 22. The XML elements and attributes that are automatically created within the DOM tree 90 capture the desired mobile application behavior and appearance as specified by the developer. To specify displayable textual components, such as screen text and button labels, the developer may simply type the textual components within the WYSIWYG representation of the mobile device user interface screen. For example, to specify a button label, the developer may simply type the label text (e.g. "OK" or "Cancel") within a visual representation of the button which he has created using a drag-and-drop GUI mechanism. As textual components of the user interface are defined, they are stored within XML elements within multi-language definition DOM tree 92. The application definition DOM tree 90 and multi-language definition DOM tree 92 thus dynamically grow in memory 82. The hierarchy that is defined within multi-language definition DOM tree 92 is based, at least in part, upon the hierarchy of graphical user interface constructs defined using the RAD tool 22. For example, if the developer designs a GUI screen which contains a single button, the text for the button label may be defined within language definition DOM tree 92 in an XML element which represents the button, which may in turn be a child of another XML element representing the screen which contains the button. The hierarchy defined within multi-language definition DOM tree 92 may be similar to, but is not necessarily exactly the same as, the hierarchy of XML elements that is defined within application definition DOM tree 90. For example, aspects of the mobile application which lack a textual component may be present in application definition DOM tree 90 but may be omitted from multi-language definition DOM tree 92.

When a textual component is stored in the multi-language definition DOM tree 92 in an XML element, a reference or "pointer" to that element is stored within the XML element or attribute which represents the "containing" user interface construct in application definition DOM tree 90. For example, when a new XML element representative of button label text is created in the multi-language definition DOM tree 92, a reference to that XML element is stored in an XML element that is simultaneously created in the application definition DOM tree 90 to represent the button itself. A specific example follows.

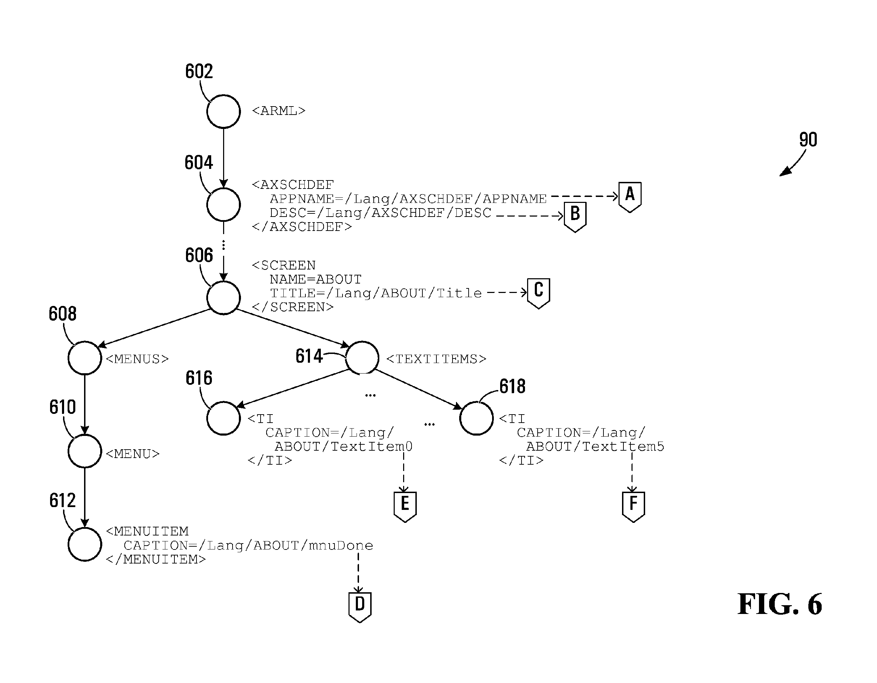

FIG. 6 illustrates the application definition DOM tree 90 data structure of FIG. 5 in greater detail. The illustrated DOM tree 90 is associated with an exemplary mobile application for a chosen wireless communication device type having just one user interface screen. The exemplary user interface screen includes a menu and displays textual information about the application, such as its name and its version number. The application definition DOM tree 90 is shown after definition of the mobile application using RAD tool 22 has been completed.

The nodes 602, 604, 606, 608, 610, 612, 614, 616 and 618 illustrated within the application definition DOM tree 90 of FIG. 6 represent XML elements which define the exemplary mobile application. The significance of the XML elements, which are identifiable by the XML text next to each node in FIG. 6, may best be understood with reference to Appendix "A" of U.S. Patent Publication No. 2003/0060896, referenced above, or with reference to Appendix "A" of U.S. Patent Application No. 10/537,621, filed June 3, 2005. In FIG. 6, a solid-line arrow from a first node to a second node indicates that the first node is the parent of the second node. Some nodes and some attributes have been omitted from FIG. 6 for clarity.

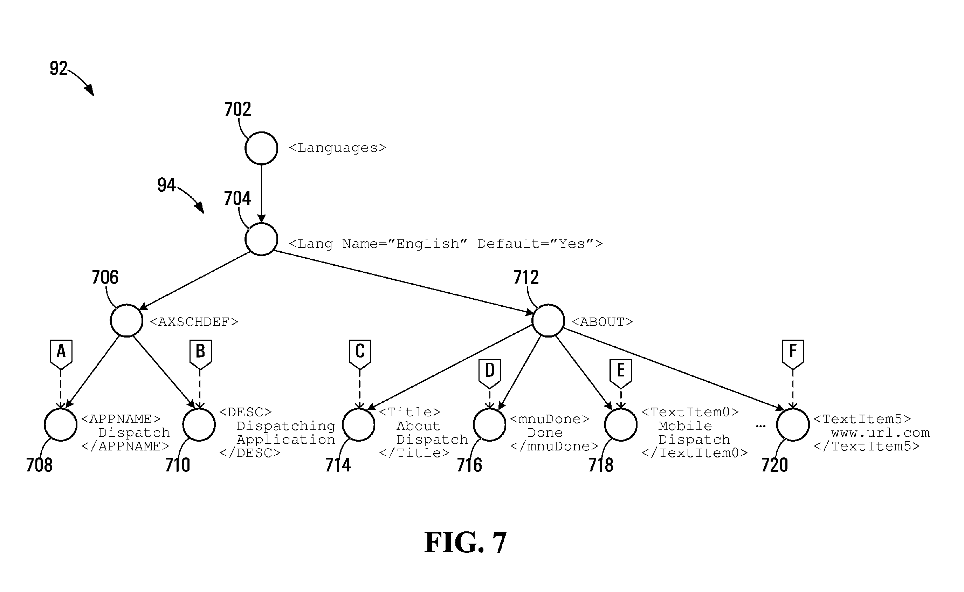

Attributes which are illustrated in bold text in FIG. 6 are attributes representing textual components of the mobile application. As illustrated, the values of these attributes do not capture the text itself, but rather are XML Path Language (XPATH) expressions which identify the XML elements of multi-language definition DOM tree 92 (shown in FIG. 7, described below) that store the actual textual components. As is known in the art, XPATH is a terse, non-XML syntax for addressing portions of an XML document, which is designed to mimic Uniform Resource Identifier syntax or file name syntax. The World Wide Web Consortium XPATH specification is provide at www.w3.org/TR/xpath.

For example, referring to FIGS. 6 and 7, the value of the APPNAME attribute of node 604 (FIG. 6), i.e. "/Lang/AXSCHDEF/APPNAME", indicates that the actual text for this attribute ("Dispatch") is actually stored within multi-language definition DOM tree 92 (FIG. 7), as the value of an <APPNAME> element 708, which is a child of an <AXSCHDEF> element 706, which in turn is a child of a <Lang> element 704 (representing the root XML element for all textual components of an application in a given language here, English). The <Lang> element 704 is a child of a <Languages> element 702 that forms the outermost element of the XML document which tree 90 represents. The value "/Lang/AXSCHDEF/APPNAME" of the APPNAME attribute of node 604 (FIG. 6) thus serves as a "pointer" or path to node 708 of multi-language definition DOM tree 92 (FIG. 7). This relationship is indicated by off-screen connector "A" in FIGS. 6 and 7. Similar off-screen connectors B, C, D, E and F illustrate the relationship between other attributes of application definition DOM tree 90 (FIG. 6) and the XML elements which actually store the corresponding textual components in multi-language definition DOM tree 92 (such as elements 710, 714, 716, 718 and 720 of FIG. 7). Actual text values are indicated in bold text in FIG. 7. Some elements of DOM tree 92 are omitted for clarity.

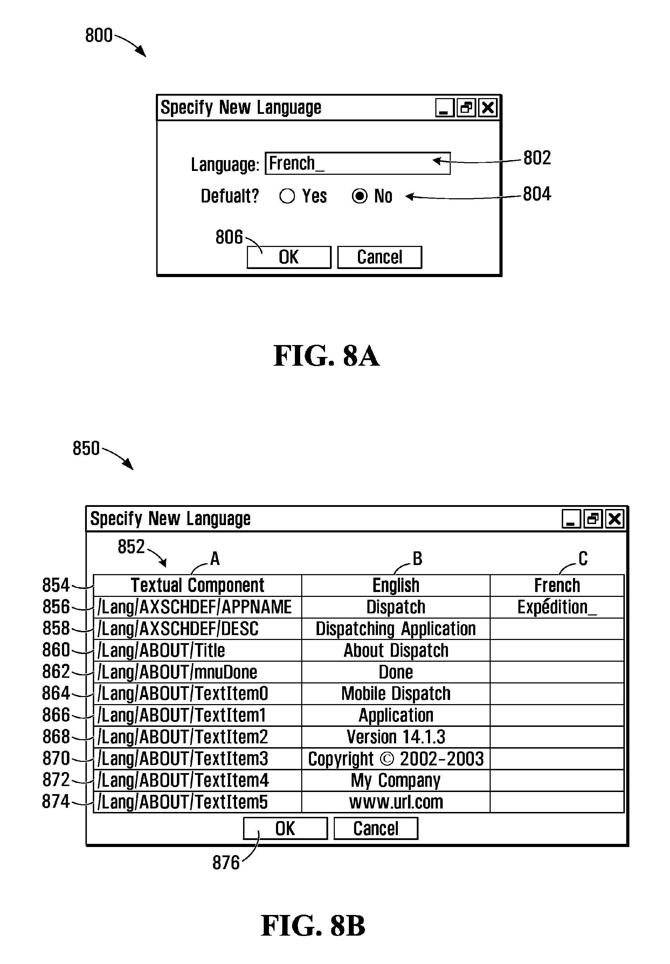

When the developer who has defined a mobile application using a first language (e.g. English) wishes for the mobile application to be available in another language (e.g. French), it is not necessary to redefine the entire mobile application anew merely so that the textual components may alternatively be specified in the desired language. Rather, the developer may simply select a "specify new language" menu option (or similar GUI construct) of RAD tool 22. This triggers the display of a "Specify New Language" dialog box 800. This is illustrated in FIG. 8A.

The "Specify New Language" dialog box 800 has a language name specification edit box 802 and default language specification radio buttons 804. The language name specification edit box 802 is for typing in the name of the new language to be supported. In FIG. 8A, the edit box 802 is illustrated after the developer has typed "FRENCH" therein. In some embodiments, this edit box 802 may instead by a drop-down list of languages which may be chosen by the developer. The default language specification radio buttons 804 are for specifying whether the new language is to be the default language. A default language is the language which should be displayed at a mobile device when a requested language is not available. For example, English may serve as the default language. In the illustrated example, the button labelled "NO" has been selected, indicating that FRENCH is not to be the default language. When the developer selects the "OK" button 806, the dialog box 800 is replaced with another dialog box 850, illustrated FIG. 8B.

As shown in FIG. 8B, dialog box 850 provides a convenient mechanism for specifying all of the mobile application's existing textual components in the new language (French). In particular, the dialog box 850 displays a table 852 for entering the textual components in the French language. Each row of table 852 represents a single textual component of the mobile application. If the number of rows is too great to be presented all at once within the dialog box 850, a scroll bar or similar mechanism may be provided for viewing a select portion of the table 852. Table 852 has three columns A, B and C, identified in table heading row 854.

The first column A identifies the textual components whose textual content is being specified by way of table 852. In the present embodiment, the identification of each textual component is by way of an XPATH expression. As indicated by the XPATH expressions of FIG. 8B, two of the textual components identified in table 852, specifically in rows 858 and 860, are children of the <AXSCHDEF> XML element 706 (FIG. 7) which represents application information such as application name and description. The textual components of the remaining rows 860, 862, 864, 866, 868, 870, 872 and 874 are children of an "ABOUT" user interface screen XML element 712 (FIG. 7) which presents various textual information about the relevant mobile application.

The second column B of table 852 (FIG. 8B) presents the current value of the textual component identified in column A in the default language (which is English in the illustrated example) as specified by the developer. That is, column B lists all of the text that requires translation into the desired new language.

The third column C of table 852 is for entry of translation text in the desired new language (French). For clarity, the present embodiment does not provide an automatic translation capability. Rather, it is the responsibility of the developer to read the text in column B and to enter a translation of that text in column C in the new language. Automatic translation could be a feature in alternative embodiments however. In FIG. 8B, French language text has been entered in column C of only one row 856. Text has yet to be entered for all other rows of table 852. For convenience, the GUI may facilitate the cutting of text from column B and pasting thereof into column C, for cases in which translation is impossible or unnecessary (e.g. as may be the case for the URL text specified in row 874 of table 852).

When the developer provides French translations in column C for each of the textual components identified in table 852 and then selects the "OK" button 876, the application definition software 78 expands the multi-language definition DOM tree 92 to include all of the newly-defined French language textual components, in a similar hierarchy as was defined for the original English language textual components. In particular, the sub-tree 94, which can be seen in FIG. 7 as the tree whose root node is the <Lang> XML element 704, will essentially be replicated to form a new sub-tree 96 under the <Languages> XML element 702. The new sub-tree 96, which is represented iconically in FIG. 5, will be identical to the sub-tree 94, except that the textual values will be the French language values entered by the developer in Column C of table 852, rather than the English language values.

The above-described procedure may be repeated to specify the textual components of the mobile application in one or more further languages, as desired.

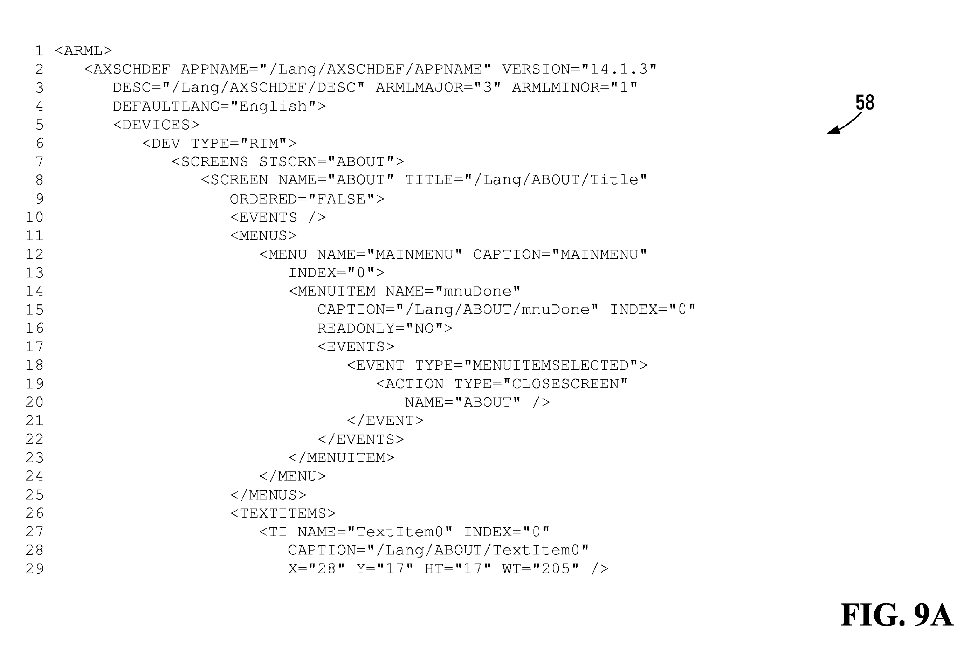

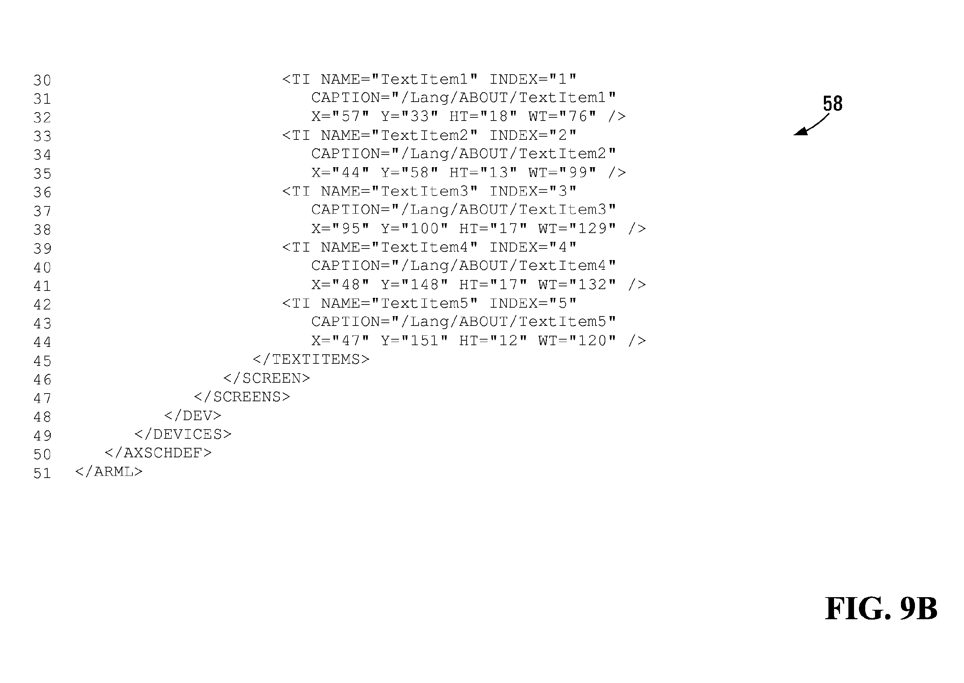

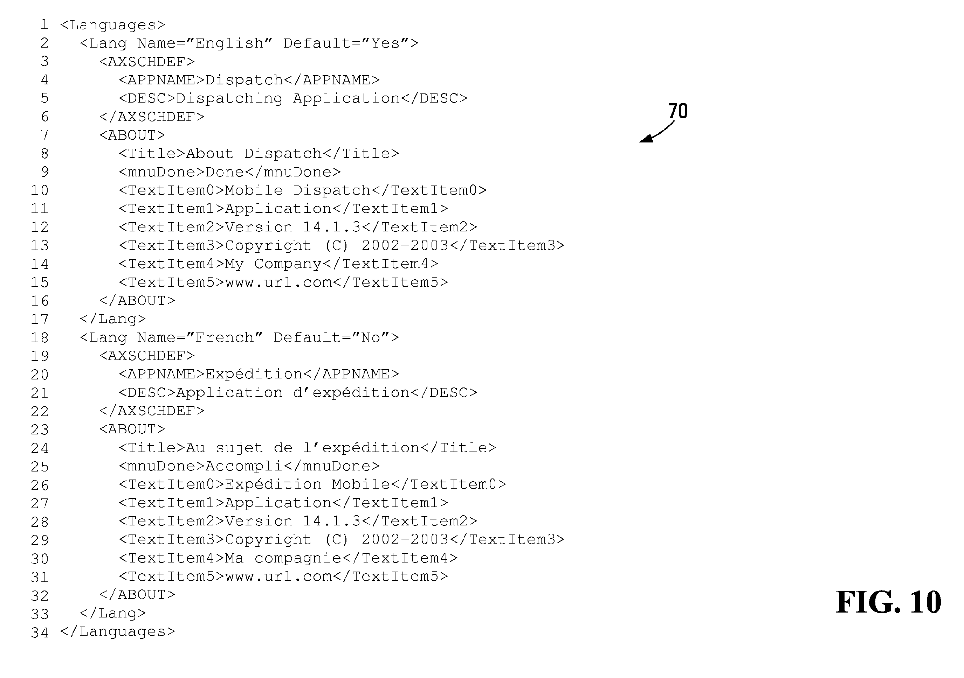

When the developer has finished specifying the textual components in each desired language, and assuming that the mobile application is otherwise complete, the developer may select a "Save" button, or similar GUI construct, of the RAD tool 22. When this is done, the application definition DOM tree 90 of FIG. 6 is serialized to form a textual XML markup language document, i.e. application definition file 58, as shown in FIGS. 9A and 9B, and the multi-language definition DOM tree 92 of FIG. 7 (with the additional, French language sub-tree 96, not shown in FIG. 7) is serialized to form a textual XML markup language document, i.e. multi-language definition file 70, which is shown in FIG. 10. These documents 58 and 70 are stored in the secondary storage 83 of RAD tool 22. In FIGS. 9A and 9B, the XPATH expressions are presented in bold type. In FIG. 10, lines 2-17 represent the English language sub-tree 94 of FIG. 7, while lines 18-33 represent the French language sub-tree 96, described above.

At this stage, the application definition file 58 and multi-language definition file 70 are uploaded to transaction server 14 via network 34 (FIG. 1), using conventional mechanisms, and stored in secondary storage 27 of transaction server 14 (FIG. 2), until they are needed by a wireless communication device 18 or 20.

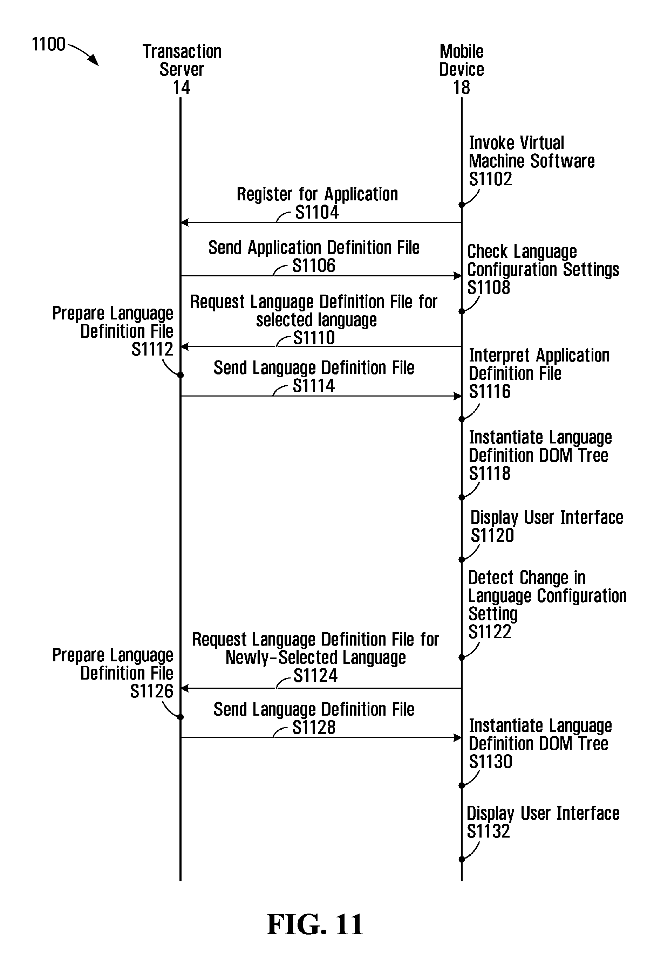

FIG. 11 is a sequence diagram illustrating operation 1100 at the transaction server 14 and one of wireless communication device 18 for loading, interpreting and executing a mobile application which has been developed to support multiple languages, as described above. FIG. 11 illustrates the sequence of communications between transaction server 44 and wireless communication device 18 that may occur when the user of a wireless communication device wishes to download and execute a mobile application for communicating with a server-side application 24. Operation for doing the same for other wireless communication devices, such as wireless communication device 20, would be similar.

Following invocation S 1102 of the virtual machine software 44 at mobile device 18, a user of the device 18 chooses to register for an available mobile application. This choice may follow an interrogation (not illustrated) of the transaction server 14 for a list of mobile applications that is available to wireless communication device 18, as described in U.S. Patent Publication No. 2003/0060896, referenced above.

When the user chooses to register for mobile application, virtual machine software 44 at device 18 composes and sends an XML registration request for the chosen application to transaction server 14 (data flow S1104). The request may take the form of an XML message containing a <REG> tag that is sent to transaction server 14 via wireless network 30, network gateway 16 and network 28 (FIG. 1). The name of the requested application may be specified in the message. In this example, it is assumed that the requested application is the application whose development at RAD tool 22 is described above (i.e. the application that is captured in the definition file 58 and multi-language definition file 70 of FIGS. 9A-9B and 10 respectively).

In response, the transaction server 14 may query its database to determine whether an application definition file whose user-interface position is compatible with mobile device 18 exists for the desired application. In the present example, it is assumed that the secondary storage 27 of transaction server 14 (FIG. 7) contains the application definition file 58 and multi-language definition file 70 illustrated in FIGS. 9A-9B and 10 respectively, and that the user interface portion of the application definition file 58 is in fact compatible with the wireless communication device 18. The application definition file 58 is sent to the wireless communication device 18 (data flow S1106) in the reverse direction, via network 28, network gateway 16 and wireless network 30 (FIG. 1).

Upon receipt of the application definition file 58, the virtual machine software at 44 at wireless communication device 18 checks a language configuration setting which indicates the user's choice of language in which textual components of mobile applications should be displayed (S1108). The configuration setting may be an administrator setting which is part of virtual machine software 44 that identifies one language of a number of possible languages from a predetermined list. In the present embodiment, the list of possible languages is not based on the set of languages actually specified by the developer using RAD tool 22 as described above (that information will not be known to the virtual machine software 44 at this stage in any event). In this example, it is assumed that the user selects English.

Based on the detected language configuration setting, virtual machine software 44 at device 18 composes and sends a message to the transaction server 14 requesting a language definition file 60 for the selected language (data flow S1110). An indicator of the chosen language may be included in the message along with the identity of the mobile application.

Once the message is received by transaction software 78 at transaction server 14, the transaction server software 78 prepares a language definition file 60 to be returned to the mobile device 18 (S1112). To prepare the language definition file 60, software 78 extracts the portion of multi-language definition file 70 which pertains to the selected language. In this example, the portion of multi-language definition file 70 which pertains to English, i.e. lines 2-17, is stored in a new language definition file 60. This new language definition file 60 is sent via an XML message back to wireless communication device 18 (S1114), where it is received and stored in secondary storage 46.

At wireless communication device 18, the newly-received application definition file 58 is tokenized (S1116). In particular, parser 61 of virtual machine software 44 (FIGS. 4A, 4B) may parse the XML text of application definition file 58 and convert each XML tag to a defined token for compact storage, and to minimize repeated parsing of the file 58. The tokenized version of the application definition file 58 may be stored for immediate or later use by device 18. In this context, the term "tokenized" may refer to placement of the XML structure into binary objects which are run-time accessible, which is much like conversion of a script into byte code.

Specifically, the application definition file 58 may initially be converted to a DOM tree representation which is subsequently traversed. For each XML element that is encountered during the traversal, a corresponding object 169 (FIG. 4B) may be instantiated from one of object classes 69. Instantiation of each object 169 may be facilitated by a fromXML() "constructor" method within the corresponding class 69, which populates the object's data members based on XML element/attribute values. For example, the constructor method may receive the XML fragment which defines the XML element in the application definition file 58 and, based on element and attribute values within the fragment, automatically populate the newly-instantiated object's data members with like values. It is noted that the constructor method may or may not meet the strict definition the term "constructor" as it is understood in the context of certain object-oriented programming languages (e.g. the method may not have the same name as the class).

For the purpose of illustrating the instantiation of a subset of the objects 169 of FIG. 4B, the interpretation of an XML fragment which defines the <MENUITEM> construct at lines 14-23 of application definition file 58 (FIG. 9A) will be described. A similar approach may be used to interpret other parts of the application definition file 58. The identified XML fragment represents a single menu item on a menu within the containing UI screen whose declaration begins at line 8 of FIG. 9A, that causes the screen to close when selected. When a DOM tree representation of the <MENUITEM> element is encountered, the result may be instantiation of a MenuItem object 175, as shown in FIG. 4B, from the following one of classes 69:

```
       Public class menuitem
       {
       str name;
       int index;
       str caption_pointer; // XPATH to caption text
       str readonly;
       event[] events; // event array
 
       fromXML (<XML>) { ... } // "constructor"
 
       writeToPersistantStorage ( ) { ... }
 
       readFromPersistantStorage ( ) { ... }
 
       onEvent ( ) { ... }
       :
       }
```

The data members "name", "index" and "readonly" correspond to attributes of the same name within the identified XML fragment. The constructor method fromXML() populates these data members with the values "mnuDone", "0" and "NO", respectively, based on the relevant XML attribute values of the fragment. The data member "caption_pointer" is populated with the XPATH expression "/Lang/ABOUT/Title" based on the value of XML attribute CAPTION.

The constructor method also populates the event array of menu item object 175. The event array is an array of event objects, each representing a different type of event that is significant with regard to the containing UI construct (in this case, menu item object 175). In the present example, only one significant event is defined for the menu item, namely, a "MENUITEMSELECTED" event which represents selection of the menu item by the mobile device user (see FIG. 9A, line 18). Accordingly, only one event object 177 is instantiated (FIG. 4B). The data members of event object 177 include an array containing an object for each action element in the referenced XML fragment (which in this case is only one action object 178) representing actions to be taken when the event occurs. Each action object is also populated by a constructor method within the action object, in like fashion.

The result of instantiating the menu item object 175 and subordinate objects is illustrated in FIG. 4B. The menu item object 175 is illustrated within the context of objects 169. In FIG. 4B, illustration of an object within the border of another object connotes the latter object's containment of the former. In the present embodiment, a contained object is a data member "child" of the containing "parent" object. For example, the menu item object 175 is a data member of a menu object (not shown).

The menu object (not shown) is contained within a screen object 171 which also includes a set of text items 181. This hierarchy reflects a mobile application GUI screen having a menu as well as textual elements. The sole significant event for the menu item object 175 is represented by event object 177, which is the sole member of the event array of menu item object 175. The event object 177 in turn contains action object 178 which represent the action to be taken (closing the GUI screen) when the containing event occurs.

Text items 181 (FIG. 4B) include a number of individual "TI" (text item) objects 183, 185, and 193, which correspond to the text items defined at lines 27-29 of FIG. 9A, lines 30-32 of FIG. 9B, and lines 42-44 of FIG. 9B, respectively. The three other text items defined at lines 33-41 of FIG. 9B are omitted from FIG. 4B for clarity.

It is noted that the menu item class contains an onEvent() method (see above). This method is invoked via a callback from the operating system 40 of wireless communication device 18 upon the detection of any event pertaining to the menu item UI construct, for purposes of determining whether the detected event is significant and thus requires action to be taken. If other UI constructs, such as buttons (not illustrated), were defined, they would also have a similar method. Cumulatively, these methods within instantiated objects 169 comprise event handler 65 of FIG. 4A. In the present example, the only method comprising the event handler 65 is the onEvent() method of the menu item object 175, as it is the only onEvent() method within the objects 169.

Each class also includes a writeToPersistentStorage() method (see above) which saves the object's state by storing data member values, e.g. to a file system. The values are stored in a binary representation. This method is invoked during the initial traversal of the DOM tree representation of application definition file 58, described above, for purposes of writing newly-instantiated objects to persistent storage. Once the data has been so stored, the objects may be de-allocated, and as a result, it is not necessary to maintain a vast set of objects representative of the entire application definition file 58 within mobile device memory. Only objects 169 pertaining to the current mobile device application state are instantiated at any given time, and mobile device resources are thereby conserved. A corresponding readFromPersistentStorage() method permits a newly instantiated object to restore its previous state from persistent storage, e.g., when an initial screen is loaded or when a subsequent screen is loaded due to user navigation to that screen. By initially storing the entire set of objects 169 to persistent storage in this fashion, the need to maintain a DOM tree representation of the application definition file 58 is avoided.

After the application definition file 58 has been tokenized, the language definition file 60 is converted to a dynamically-accessible DOM tree representation (S1118). The resultant language definition DOM tree 200 is illustrated in FIG. 4B. Here again, objects illustrated within the border of another object are understood to be children of that object. As illustrated, the root <Lang> element 202 has two children, namely the <AXSCHDEF> element 204 and <ABOUT> element 210. The <AXSCHDEF> element 204 itself has two children, namely, the <APPNAME> element 206 and <DESC> element 208. The <ABOUT> element 210, which represents the sole graphical user interface screen of the exemplary mobile application, has numerous children elements 212, 214, 216, 218 and 228. Other children elements are omitted for clarity.

At this stage, the initial screen (or, in the present example, the only screen) of the user interface of the mobile application is displayed at the wireless communication device 18 (S 1120). To display a screen, screen generation engine 67 (FIG. 4A) may employ a loadScreen routine 77, which is one of the general purpose routines 59 within virtual machine software 44 (FIG. 4B). This routine may accept as a parameter a unique screen name. Based on that name, the routine may find the appropriate representation of the named screen within stored object data 179 in local storage 46 (as previously stored by the writeToPersistentStorage() method of that screen when the DOM tree representation of application definition file 58 was initially traversed), instantiate a new screen object 169, and cause the new screen object to populate itself with the stored data, e.g. through invocation of the readFromPersistentStorage() method of the screen object. The latter method may in turn instantiate subordinate objects, such as menus and, in turn, menu items, and cause the readFromPersistentStorage() methods of these subordinate objects to be called, in an iterative fashion. In the result, a hierarchy of objects 169 are instantiated from object classes 69 within the virtual machine software 44, as illustrated in FIG. 4B.

For each instantiated object 169 that is representative of a GUI construct, such as a screen, menu or menu item, a method in the object 169 invokes appropriate APIs of the wireless communication device operating system 40 to create a corresponding GUI construct for display by the operating system 40. Attributes that were originally defined in XML within application definition file 58 and are now stored within the virtual machine object instance 169 (e.g. GUI construct screen location, color and visibility for example), are applied to the corresponding GUI construct that is created by device operating system 40 responsive to the API calls. For attributes defining displayable textual components of the GUI, the XPATH expression value is passed as a parameter to a generic GetText() routine 197 (FIG. 4B). The GetText() routine 197 in turn uses the XPATH parameter to retrieve the text from the relevant XML element of language definition DOM tree 200. This text retrieval is illustrated schematically in FIG. 4B by way of a dashed arrow 230. The GetText() routine may invoke a SelectSingleNode(Xpath) DOM parser-implemented method to facilitate text retrieval. The English language text returned by the GetText() method 197 is then passed by the relevant object 169 to the corresponding operating system GUI construct through an appropriate operating system API. All elements originally defined between the <SCREEN> and </SCREEN> definition tags of the application definition file 58 are so processed. After the entire GUI screen has been so created in memory 36 (FIG. 4A), it is displayed, using conventional techniques. In the result, all of the text of the UI screen appears in the English language, as it was originally specified within the language definition file 60.

If the wireless communication device user subsequently decides that the mobile application should be displayed in a different language-say, French-then the user (or an administrator) may change the language configuration setting at the wireless communication device 18 to reflect this choice. The changed language configuration setting is detected at the mobile device 18 (S1122, FIG. 11) and, as a result, data flow S 1110, operation S 1112, data flow S 1114, operation S 1118 and operation S 1120, as described above, are repeated, this time for the French language textual components. In particular, a new, French language definition file 60 is requested (data flow S 1124); the French language definition file 60 is created by transaction server software 78 (S 1126) and sent to the mobile device 18 (data flow S1128); based upon the returned file, a French language definition DOM tree 200 is instantiated at the wireless communication device 18 (FIG. 4B); and the graphical user interface screen is created through operating system API calls and displayed, this time with French language text. The latter text is retrieved from the language definition DOM tree 200 (which now contains French language text) using the GetText() method 197, as described above and as represented by the arrows 230 of FIG. 4B (S1132). Notably, display of the same application in a different language is achieved without downloading new application definition file 58 to the wireless communication device 18. Moreover, the stored binary representations 179 (FIG. 4B) of the objects 169 need not be updated in secondary storage 46 of the mobile device 18. The mobile application may need to be terminated and restarted to show the French language text.

If it is determined at transaction server 14 that no language definition file 60 exists for the relevant mobile application in the chosen language, the transaction server 14 may return a language definition file 60 in the default language (such as English in the example).

As will be appreciated by those skilled in the art, modifications to the above-described embodiment can be made without departing from the essence of the invention. For example, in some embodiments, the RAD tool 22 may generate master definition files as described in U.S. Patent Publication No. 2003/0060896, referenced above, rather than wireless communication device-specific application definition files 58. In this case, transaction server 14 may create the application definition file 58, before sending them to the wireless communication device.

In another alternative, rather than generating a single multi-language definition file 70 containing multiple <Lang> definitions for multiple languages, RAD tool 22 may generate multiple language definition files 60, one for each language for which the textual GUI components have been defined. In this case, it is not necessary to upload an entire multi-language definition file 70 from the RAD tool 22 to the transaction server 14 every time that a new language is added. Moreover, individual language definition files 60 need not be generated by application development software 78 (FIG. 5) from a multi-language definition file 70, as described in FIG. 11 (S1112, S1126). Different language definition files 60 could be stored at different devices apart from transaction server 14. For example, newly defined language definition files could be stored at different URLs on the World Wide Web. The URL for each language definition file 60 may be stored at transaction server 14. This may provide a convenient and flexible "distributed" approach towards supporting a mobile application in multiple languages.

It should also be appreciated that markup language documents need not be encoded using XML. Alternative markup languages (e.g. Standard Generalized Markup Language, of which XML is a subset) could be employed.

In some embodiments, after a multi-language definition file 70 is uploaded to transaction server 14, software executing at the transaction server 14 may examine the file 70 to determine the set of language(s) in which textual components of the mobile application have been specified. This set of languages may then be communicated to the wireless communication device 18 or 20, e.g., via an XML message. The languages may then be displayed the language configuration utility at the wireless communication device. By presenting a list including only languages which are known to be available, there can be greater certainty that the mobile application will actually be presented in the selected language.

In some embodiments, rather than instantiating a language definition DOM tree 200 (FIG. 4B), the wireless communication device 18 may instead instantiate a hierarchy of objects which is analogous to a DOM tree, but in which each object is based on an object-oriented class which simply stores and retrieves textual content on demand. The mechanism that is used to return a specified textual component could be a hash table. Instead of using Xpath or a DOM tree, each textual component could be uniquely identified by a markup language attribute having a unique value, such as CAPTION="01123". An alternative language definition file could be provided that would essentially constitute a simple indexed table, e.g.:

| VALUE | TEXT |
|---|---|
| 01122 | "Hello World" |
| 01123 | "Foo" |
| (etc.) | |

When the device receives such a language definition file it could simply store the strings in a hash table, using the unique value as a hash key for each string. A GetText() routine could subsequently take in the unique value and retrieve the text from the hash table.

Other modifications will be apparent to those skilled in the art and, therefore, the invention is defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A method comprising:
at a wireless communication device, receiving a markup language document defining a format of a user interface, said markup language document comprising a descriptor for locating a textual component of said user interface within a separate file;
at said wireless communication device, receiving said separate file containing said textual component; and
based on said descriptor and said separate file, presenting said textual component within said user interface at said wireless communication device.

2. The method of claim 1 wherein said markup language document is a first markup language document and said separate file comprises a second markup language document.

3. The method of claim 1 or claim 2 wherein said descriptor defines a path to said textual component within said second markup language document.

4. The method of any one of claims 1 to 3 wherein said presenting comprises, at said wireless communication device:
instantiating from an object-oriented class an object representing a user interface construct containing said textual component, said object comprising said descriptor; and
using said descriptor, accessing said textual component within a dynamically accessible representation of said second markup language document.

5. The method of claim 4 wherein said user interface construct is a screen, a menu item, a button, an edit box, a check box, a radio button, message box, a drop down list, a list box or a grid.

6. The method of any one of claims 1 to 5 wherein said separate file comprises a table containing said textual component paired with a unique identifier of said textual component, and wherein said descriptor comprises said unique identifier.

7. The method of claim 6 wherein said table is a hash table and further comprising storing said textual component in said hash table, and wherein said presenting comprises retrieving said textual component from said hash table by supplying a hash key comprising said unique identifier.

8. The method of any one of claims 1 to 7 wherein said textual component is a title, a label or a caption.

9. The method of any one of claims 1 to 8 further comprising sending an indicator of a chosen language at said wireless communication device to a remote computing device prior to said receiving said separate file, and wherein said textual component of said separate file is in said chosen language.

10. The method of claim 9 wherein said indicator of a chosen language at said wireless communication device is based on a configuration setting of said wireless communication device.

11. The method of claim 9 or claim 10 further comprising:
at said wireless communication device, receiving an indication of a new chosen language;
from said wireless communication device, further sending an indicator of the new chosen language to said remote computing device;
at said wireless communication device, receiving another separate file containing said textual component in said new chosen language; and
using said descriptor and said other separate file, presenting said textual component within said user interface at said wireless communication device in said new chosen language.

12. The method of claim 11 wherein either said chosen language or said new chosen language is English.

13. A machine-readable medium comprising program code executable by a computing device or system for implementing the method of any one of claims 1 to 12.

14. A wireless communication device comprising:
at least one processor; and
a memory coupled to said at least one processor storing:
a markup language document defining a format of a user interface, said markup language document comprising a descriptor for locating a textual component of said user interface within a separate file;
the separate file containing said textual component; and
machine-executable code which, when executed by the at least one processor, implements the method of any one of claims 1 to 12.
